# EUROPEAN PATENT SPECIFICATION

(11) **EP 0 959 679 B1**
(45) Date of publication and mention of the grant of the patent: **06.02.2002**
(21) Application number: 96933721.1
(22) Date of filing: 07.10.1996
(51) Int. Cl.: A01M 5/08

(54) **METHOD AND DEVICE FOR SELECTIVELY COLLECTING MATERIAL AND ORGANISMS ON PLANTS**
VERFAHREN UNG VORRICHTUNG ZUR SELEKTIVEN SAMMLUNG VON MATERIAL UND ORGANISMEN AUF PFLANZEN
PROCEDE ET DISPOSITIF DE COLLECTE SELECTIVE DE MATIERE ET D'ORGANISMES SUR DES PLANTES

(30) Priority: 09.10.1995 SE 9503489
(43) Date of publication of application: 01.12.1999
(73) Proprietor: Alternativ Förädling Wiik-Forsén AB, 705 97 Glanshammar (SE)
(72) Inventor: FORSEN, Lars, S-705 97 Glanshammar (SE)
(74) Representative: Karlsson, Leif Karl Gunnar
(86) International application number: SE9601267
(87) International publication number: WO9713408

(56) References cited:
- DK-C- 24 911
- SE-C- 116 241
- US-A- 1 478 424
- DERWENT'S ABSTRACT, No. 93-393854/49, Week 9349; & SU,A,1 777 754, (ALPYSBAEV S T), 30 November 1992.
- DERWENT'S ABSTRACT, No. 92-248272/30, week 9230; & SU,A,1 685 347, (CENT ASIA PLANT PROTECTION RES INST), 23 October 1991.

## Description

The present invention in a first aspect relates to a method according to the preamble of claim 1 and in a second aspect to a device according to the preamble of claim 6.

In connection with plant cultivation there exists a lot of different organisms which in one way or another are dependent on the plants. The purpose of this invention is to collect material and organisms from the plant cultivation, especially insects, arthropods and funguses in order to influense the cultivationresult in the desired direction and also to make use of the collected material. This procedure creates opportunities for non-poisonous cultivation and use of the plants and the organisms free from chemicals.

The collection of organisms on plants by exposing them to compressed air and at the same time sucking them up in a container is previously known, for example by DK 24911.

There is a disadvantage with the known device, in that the material and organisms, existing on or around the plants will be injudiciously sucked-up and collected in the container. Useful insects like, for example ladybirds, bees and bumble-bees will be sucked up. Firstly it is desirable that these are left untouched. Secondly the collection of such organisms, means that the collected material is more heterogeneous which makes it more difficult to make use of it for different purposes.

The purpose of the present invention is to bring about a procedure and a device of this kind where this disadvantage is set aside and consequently some of the organisms on and around the plants are prevented to be sucked-up in the container.

According to the invention this has been attained in that a method of the kind specified in the preamble of claim 1, includs the special measures specified in this claim's characteristic portion and in that a device of the kind specified in the preamble of claim 6 has the special features specified in this claim's characteristic portion.

Owing to the fact that these signals make some of the organisms leave the plants or prevent them from congregating there, it is possible to avoid that these organisms be sucked-up in the container.

According to a preferred embodiment form of the invention these signals consist of sound-, light- or scentsignals or combinations of these. Through this type of influense some kinds organisms will be frightened away, especially sound- and lightsignals produce this effect. Furthermore, by sending out a scentsubstance some kinds of organisms can be made to change residence or to avoid settling down on the plants. This allows that the following collection can be made on plants where such kinds of organisms which one don' t want to collect are absent due to the scent treatment.

It is previously known, for example by SU 1 685 347, SU 1 777 754, SE 116 241 and US 1 478 424 that in collecting organisms from plants, one can expose them to different kinds of influense as for example warmth, scent, sound or light. In the known devices and procedures however this influence aims to attract the organisms in order to collect them or in combination with air-sucking improve the effect of the collection. They are therefore designed for this purpose and do not allow any separating effect.

In the dependent claims, advantageous embodiments of the invented method and the invented device are mentioned.

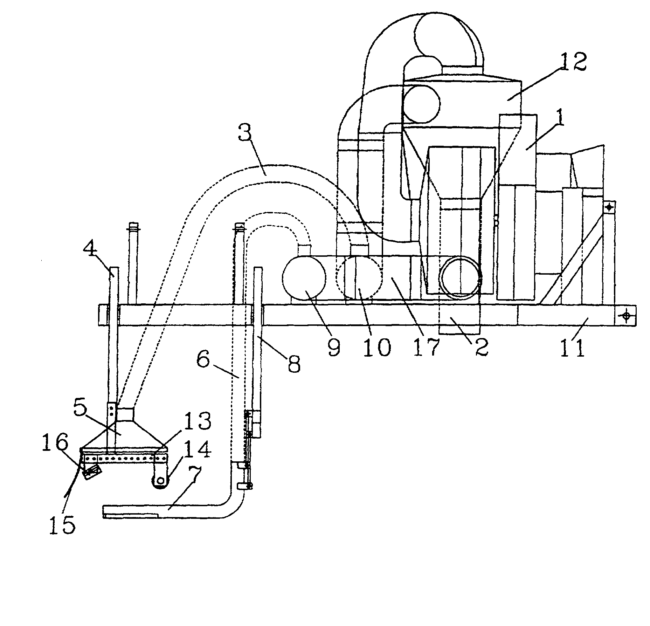

The invention is more deeply explained by the following detailed description of an embodiment of this with reference to the enclosed figure showing a collection device according to the invention.

The device consists of a blower with varying suction and pressure qualities.The compressed air passes the airchannel 9 for distributing the air to the flexible pipes 6 and the especially designed blower outlets 7. The airchannel 9 is equipped with an air pressure regulator. The blower outlets are designed in order to aim an air current at the plant and the organism. The organisms are instantly, at the same time as the plants start to move, which makes it more difficult for the material and the organisms to cling to the plant and make the transportation possible through the air current to the suction hood 5. The material and organisms are transported through the flex pipes 3 to a suction channel 10, which is equipped with a device for regulation of the suction pressure which leads to a cyclone 12 with container 2. The suction hood 5 can in certain cases be equipped with an elastic screening 15, so the air current more easily can be led in the flow direction. In or outside the field between the blowpipe 7 and suction hood 5 the extra fittings 16 are fixed, like equipment for heating / cooling 17 and supply of adding agent 17, scraper 14, brushes 14, sound- and lightequipment 16 on special holds 13, where they individually can be adjusted to the right height and breadth position. The equipment can be fixed on a chassie 11, which can be placed on a vehicle such as a tractor or on a selfgoing unit. The blower outlets 7 and the hoods 5 are separately fixed to lifting devices 8 and 4 and through flexible tubes 6 and 3 connected with a blower unit 1 whose driving force could be power from a vehicle or a separate motor. The brush 14 is best placed horizontally and rotating and arranged as vertically and horizontally adjustible.

The field of current air between the blow- and suction outlets is best if it could be varied. This could be done by regulating the blow- or suction pressure or both of them. Another possibility of regulation could be made by arranging the outlets sideways and vertically adjustible so that their mutual distance can be adjusted. By the adjustment an adaption to the cultivated plants and to the behaviour of the organisms is brought about. Warmth or cold added in order to improve the effect can be distributed directly in the field or through blower outlet. The effect field can be multiplied with advantage through arrangement of several blow- and suction outlets in order to cover a bigger harvest area. The facilities used in order to improve the effect could then be arranged individually for each field or cover more of them. The same is true about the signal instruments which influence some of the organisms to depart in order to avoid collection.

The collected material from the field, could through the flexible pipes be collected in a container under the cyclon but before the energy source, so that there is a minimal destructive effect on the collected material which makes it possible to use this material. This procedure is to be used on plants within the following families among others: Umbellate Family (Umbelliferæ), Grass Family (Gramineæ), Composite / Daisy Family (Compositæ), Wallflower / Crucifer Family (Cruciferæ), Mint / Labiate Family (Labiatæ), Lily Family (Liliaceæ), Flax Family (Linaceæ), Heath Family (Ericaceæ), Goosefoot Family (Chenopodiaceæ), Rose Family (Rosaceæ), Poppy Family (Papaveraceæ), Pea Family (Leguminosæ).

## Claims

1. A method for selectively collecting material and organisms, such as insects, arthropods and funguses around and on plants where the material / organisms are situated, where a certain kind or certain kinds of the material / organisms mentioned is / are collected by exposing the plants to an air-current between a blower outlet and a suction hood, **characterized by** directing stimulus signals towards the plants, which signals are such that another kind or other kinds of organisms mentioned is / are influenced to leave the plants and / or avoid gathering on the plants, so they cannot be exposed to the aircurrent.

2. A method according to claim 1, where the signals mentioned include sound-, light- or scentsignals or a combination of those.

3. A method according to claim 1 or 2, where at least one of the outlet's blow pressure, the suction hood's suction pressure and the mutual distance between the blowand suction outlets are adjusted.

4. A method according to one of claims 1 - 3, where the plants are exposed to heat or cold.

5. A method according to one of claims 1 - 4, where the plants are exposed to mechanical influence like brushing.

6. Device for selective collection of material and organisms such as insects, arthropods and funguses around and on the plants, where the material / organisms are situated including a blower outlet (7) and a suction hood (5) arranged for exposing the plants to an aircurrent in order to collect a certain kind or certain kinds of the material / organisms mentioned, **characterized by** signal means (16) directed towards the field between blower outlet (7) and suction hood (5), said signal means being arranged to send out stimulisignals of the kind so that another kind or other kinds of organisms mentioned, are influenced to depart from the plants and / or prevented from gathering on the plants, so that they will not be exposed to the aircurrent.

7. Device according to claim 6, where the mentioned signal means (16), includes at least either soundproducing-, lightproducing- and scentproducing means.

8. Device according to claim 6 or 7, where regulation means are arranged to adjust at least one of the blower outlet's blow pressure, the suction hood's suction pressure and the mutual distance between the blow- (7) and suction outlets (5).

9. Device according to one of claims 6 - 8, including cold- or heatproducing means (17).

10. Device according to one of claims 6 - 9, including mechanical means (14) such as a brush or scraper arranged to affect the plants.

## Patentansprüche

1. Verfahren zur selektiven Sammlung von Material und Organismen, wie Insekten, Gliederfüßlern und Pilzen um und auf Pflanzen, wo sich das Material/Organismen befinden, wo eine bestimmte Art oder bestimmte Arten von den genannten Materiaiien/Organismen durch Aussetzen der Pflanzen einem Luftstrom zwischen einem Gebläseauslass und einem Saugkopf gesammelt werden, **gekennzeichnet durch** eine Zufuhr stimulierender Signale zur Pflanze, wobei die Signale solche sind, dass eine andere Art oder andere Arten der genannten Organismen dazu veranlasst werden, die Pflanzen zu verlassen, und/oder sie gehindert werden, sich auf den Pflanzen zu sammeln, so dass sie nicht dem Luftstrom ausgesetzt werden.

2. Verfahren nach Anspruch 1, worin die genannten Signale Schall-, Licht- oder Duftsignale oder eine Kombination dieser beinhalten.

3. Verfahren nach Anspruch 1 oder 2, worin mindestens einer, der Gebläsedruck des Auslasses, der Saugdruck des Saugkopfs und/oder der beiderseitige Abstand zwischen dem Gebläse- und dem Saugauslass verstellt werden.

4. Verfahren nach einem der Ansprüche 1 bis 3, worin die Pflanzen Wärme oder Kälte ausgesetzt werden.

5. Verfahren nach einem der Ansprüche 1 bis 4, worin die Pflanzen einer mechanischen Wirkung wie Bürsten ausgesetzt werden.

6. Vorrichtung zur selektiven Sammlung von Material und Organismen wie Insekten, Gliederfüßlern und Pilzen um und auf Pflanzen, wo das/die Material/Organismen sich befinden, beinhaltend einen Gebläseauslass (7) und einen Saugkopf (5), die zum Aussetzen der Pflanzen in einem Luftstrom angeordnet sind, um eine bestimmte Art oder bestimmte Arten des/der genannten Materials/Organismen zu sammeln, **gekennzeichnet durch** Signalmittel (16), die auf ein Feld zwischen dem Gebläseauslass (7) und dem Saugkopf (5) gerichtet sind, wobei die genannten Signalmittel so angeordnet sind, um stimulierende Signale der Art auszusenden, dass eine andere Art oder andere Arten der genannten Organismen so beeinflusst werden, die Pflanze zu verlassen und/ oder gehindert werden, sich auf den Pflanzen zu sammeln, so dass sie nicht dem Luftstrom ausgesetzt werden.

7. Vorrichtung nach Anspruch 6, worin die genannten Signalmittel (16) mindestens ein Schallerzeugungs-, Lichterzeugungs- oder Geruchserzeugungsmittel beinhalten.

8. Vorrichtung nach Anspruch 6 oder 7, worin die Mittel zur Regelung so angeordnet sind, um mindestens den Blasdruck des Gebläseauslasses, den Saugdruck des Saugkopfs oder den gegenseitigen Abstand zwischen den Blas-(7) und den Saugauslässen (5) zu verändern.

9. Vorrichtung nach einem der Ansprüche 6 bis 8, beinhaltend Kälte oder Wärme erzeugende Mittel (17).

10. Vorrichtung nach einem der Ansprüche 6 bis 9, beinhaltend mechanische Mittel (14), wie eine Bürste oder ein Kratzer, die so angeordnet sind, um auf die Pflanzen einzuwirken.

## Revendications

1. Procédé pour récolter sélectivement des matériaux et organismes, tels que des insectes, des arthropodes et des champignons autour de et sur des plantes où sont situés les matériaux / organismes, un ou plusieurs types donnés des matériaux / organismes mentionnés étant récolté en exposant les plantes à un courant d'air entre une sortie de soufflerie et une hotte d'aspiration, **caractérisé par** le fait d'envoyer des signaux de stimulation aux plantes, lesquels signaux sont tels qu'un ou plusieurs autres types d'organismes mentionnés sont incités à quitter les plantes et/ou à éviter de se regrouper sur les plantes, de sorte qu'ils ne peuvent pas être exposés au courant d'air.

2. Procédé selon la revendication 1, dans lequel les signaux mentionnés comprennent des signaux sonores, lumineux ou odorants ou une combinaison de deux-ci.

3. Procédé selon la revendication 1 ou 2, dans lequel au moins l'une de la pression de sortie de soufflerie, de la pression d'aspiration au niveau de la hotte et de la distance mutuelle entre la sortie de soufflerie et l'aspiration est ajustée.

4. Procédé selon l'une des revendications 1 à 3, dans lequel les plantes sont exposées à de la chaleur ou à du froid.

5. Procédé selon l'une des revendications 1 à 4, dans lequel les plantes sont exposées à un effet mécanique comme un brossage.

6. Dispositif pour la collecte sélective de matériaux et organismes, tels que des insectes, des arthropodes et des champignons autour de et sur des plantes où sont situés les matériaux / organismes, comprenant une sortie de soufflerie (7) et une hotte d'aspiration (5) placées pour exposer les plantes à un courant d'air afin de récolter un ou plusieurs types donnés des matériaux / organismes mentionnés, **caractérisé par** des moyens d'émission de signaux (16) dirigés en direction du champ entre la sortie de soufflerie (7) et la hotte d'aspiration (5), lesdits moyens d'émission de signaux étant agencés pour envoyer des signaux de stimulation tels qu'un ou plusieurs autres types d'organismes mentionnés sont incités à quitter les plantes et/ou à éviter de se regrouper sur les plantes, de sorte qu'ils ne peuvent pas être exposés au courant d'air.

7. Dispositif selon la revendication 6, dans lequel les moyens d'émission de signaux mentionnés (16) comprennent au moins des moyens de production sonore, lumineuse ou odorante.

8. Dispositif selon la revendication 6 ou 7, dans lequel des moyens de régulation sont prévus pour ajuster au moins l'une de la pression de sortie de soufflerie, de la pression d'aspiration au niveau de la hotte et de la distance mutuelle entre la sortie de soufflerie (7) et l'aspiration (5).

9. Dispositif selon l'une des revendications 6 à 8, comprenant des moyens (17) de production de froid ou de chaleur.

10. Dispositif selon l'une des revendications 6 à 9, comprenant des moyens mécaniques tels qu'une brosse ou un racloir prévu pour agir sur les plantes.
